# EUROPÄISCHE PATENTSCHRIFT

(11) **EP 0 554 429 B1**
(45) Veröffentlichungstag und Bekanntmachung des Hinweises auf die Patenterteilung: **26.03.1997**
(21) Anmeldenummer: 92917763.2
(22) Anmeldetag: 21.08.1992
(51) Int. Cl.: G02B 5/23

(54) **OPTISCH TRANSPARENTES PHOTOCHROMES KUNSTSTOFFMATERIAL**
OPTICALLY TRANSPARENT PHOTOCHROMIC PLASTIC
MATIERE PLASTIQUE PHOTOCHROME, OPTIQUEMENT TRANSPARENTE

(30) Priorität: 22.08.1991 DE 4127810
(43) Veröffentlichungstag der Anmeldung: 11.08.1993
(73) Patentinhaber: Optische Werke G. Rodenstock, 80469 München (DE)
(72) Erfinder: EFFER, Erhard, D-8134 Pöcking (DE); MELZIG, Manfred, D-8031 Wessling (DE); SCHUSTER, Herbert, D-8080 Emmering (DE); MARTINUZZI, Giuseppe, D-8031 Eichenau (DE)
(74) Vertreter: Münich, Wilhelm, Dr.
(86) Internationale Anmeldenummer: DE9200698
(87) Internationale Veröffentlichungsnummer: WO9304387

(56) Entgegenhaltungen:
- EP-A- 0 268 896
- EP-A- 0 294 056
- EP-A- 0 402 228
- EP-A- 0 407 237
- WO-A-89/07278
- DE-A- 1 772 846
- DE-A- 2 906 193
- DE-A- 3 602 215
- DE-A- 3 739 415

## Beschreibung

### Technisches Gebiet

Die Erfindung bezieht sich auf ein optisch transparentes photochromes Kunststoffmaterial, das vorzugsweise für Brillengläser mit oder ohne optische Wirkung beispielsweise für Sonnenschutzwecke, aber auch für andere photochrome Artikel, wie Sonnenschutz-Elemente, beispielsweise KFZ-Dächer verwendbar ist.

### Stand der Technik

In der Brillenoptik, ist Polydiethylenglykolbisallylcarbonat das derzeit am häufigsten für Brillengläser verwendete Kunststoffmaterial.

Dieses Material kann nur nachträglich mit photochromen Farbstoffen eingefärbt werden, da der zur Polymerisation in hoher Konzentration (4-8%) notwendige Radikalstarter, üblicherweise ein organisches Peroxid, beim Härtungsprozeß die photochromen Moleküle irreversibel zerstört.

Ein Verfahren zum Einfärben von Polydiethylenglykolbisallylcarbonat und anderen in der Brillenoptik verwendbaren Kunststoffmaterialien sind beispielsweise in der FR 25 87 501, der DE 25 35 300, der US 4 300 821 oder der US 4 578 305 beschrieben. Diese Verfahren haben jedoch alle keinen praktische Anwendung gefunden.

Ein weiteres Verfahren zur nachträglichen Einfärbung von Kunststoffmaterialien ist in der DE 35 16 568 beschrieben. Dieses Verfahren weist zwar eine Reihe von Vorteilen auf, mit diesem sowie anderen Verfahren nachträglich eingefärbte photochrome Kunststoffartikel haben jedoch den Nachteil, daß die Lebensdauer der Farbstoffe gering ist.

Der wichtigste Faktor in der Degradation von - insbesondere photochromen - Farbstoffen ist die Zerstörung durch Singulett-Sauerstoff. Aufgrund der nur sehr geringen Färbetiefe von 10-100 µm bei der nachträglichen Einfärbung ist die Diffusionsbarriere für Luftsauerstoff relativ klein, so daß die Farbstoffe durch eindiffundierten Sauerstoff angegriffen werden.

Dieser Nachteil könnte durch die "Massefärbung" der Kunststoffmaterialein überwunden werden, da bei "Massegefärbten" Artikeln die Diffusionsbarriere für den größten Teil des Farbstoffs wesentlich größer als bei "Oberflächen-gefärbten" Artikeln ist.

Es sind zwar bereits Kunststoffmaterialien bekannt, die eine Massefärbung erlauben, die meistens dieser optisch transparenten Kunststoffe sind jedoch aus anderen Gründen wenig für ophthalmologische Zwecke geeignet:

Der "Masse-färbbare" Kunststoff Polymethylmethacrylat (PMMA) ist wegen seiner geringen Oberflächenhärte nur in "Wegwerf"-Brillen oder für Stützscheiben zur Fassungsdemonstration im Gebrauch.

Das wegen seiner ausgezeichneten Bruchfestigkeit als Sicherheitskunststoffglas verwendete Polycarbonat besitzt neben einer ebenfalls unzureichenden Kratzfestigkeit eine für Wirkungsgläser zu hohe Dispersion (vₑ ≈ 30).

Die EU-A 294 056 beschreibt die Herstellung photochromer Kunststoffgläser auf der Basis von Polyurethanen. Produkte die nach diesem oder den in den älteren Veröffentlichungen der Asahi Glas Comp. (JP 59 135152) bzw. von Baltzers (US 3 508 810) beschriebenen Verfahren hergestellt werden, besitzen jedoch alle den Nachteil der Mehrfachschichtsysteme.

Dieser wird vor allem auf dem Gebiet der ophthalmologischen Industrie augenfällig. Die Verwendung von Glas als Trägermaterial für photochrome Sonnenschutzgläser ist wenig sinnvoll, da es bereits hervorragende silikatische Produkte (DE 2 609 468) auf dem Markt gibt und der Hauptvorteil der Kunststoffgläser, das geringe Gewicht, in derartigen Compoundsystemen verlorengeht.

Die Verwendung von Polyurethanfolien zwischen zwei Kunststoffgläsern, wie in der o.g. EU-A 294 056 vorgeschlagen, ist ein sehr aufwendiges und wegen der Schwierigkeit der Haftung der Schichten aufeinander unbefriedigendes Verfahren, das aufgrund der in der Brillenglasfertigung üblichen Verfahren des Waschens, Färbens und der Antireflexions-Beschichtung im Hochvakuum zu hohen Ausfallquoten führt. Werden die Gießformschalen aus Kunststoff oder Glas nicht abgearbeitet, was aufwendig und kostspielig ist, so ergeben sich kosmetisch unbrauchbar dicke Glasstärken, da die Gießformschalen, je nach Material, eine Mindeststärke von 1-2 mm aufweisen müssen, wenn keine thermische Vorzüge in Kauf genommen werden sollen. Diese wiederum führen bei Wirkungsgläser zu unbrauchbaren Produkten.

### Darstellung der Erfindung

Es ist Aufgabe der Erfindung ein optisch transparentes photochromes Kunststoffmaterial anzugeben, das universell einsetzbar ist, und das eine Massefärbung mit Farbstoffen und insbesondere mit photochromen Farbstoffen erlaubt. Ferner soll ein Verfahren zur Massefärbung angegeben werden.

Eine Lösung dieser Aufgabe ist mit ihren Weiterbildungen in den Patentansprüchen gekennzeichnet.

Es wird ein optisch transparentes photochromes Kunststoffmaterial angegeben, das durch das Einbringen photochromer Verbindungen in eine Mischung monomerer Bestandteile und nachfolgende Polymerisation erhalten wird, wobei die photochromen Verbindungen mindestens zwei über ein Spirokohlenstoffatom verknüpfte Ringsysteme aufweisen und ihre photochrome Einfärbung auf einem reversiblen Bindungsbruch zu dem Spiro-C-Atom beruht. Die Mischung der monomeren Bestandteile weist erfindungsgemäß mindestens ein schwefelhaltiges Material auf und die photochromen Verbindungen sind in dem Kunststoffmaterial als feste Bestandteile enthalten.

Erfindungsgemäß wurde gefunden, daß verschiedene photochrome Farbstoffe in schwefelhaltigen hochbrechenden Kunststoffmaterialien, wie sie z.B. in der US 4 689 387, der EU 268 896 und der EU 235 743 beschrieben sind, hervorragende Färbungen in Masse mit einer ausgezeichneten Lebensdauer ergeben. Diese Aussage gilt nicht nur im Vergleich mit anderen Materialien, sondern auch im Vergleich zu oberflächengefärbten Gläsern aus dem gleichen Material.

Dies ist deshalb überraschend, da beispielsweise die in der US 4 602 075 als Beispiel 1 und 5 beschriebenen aromatischen Diallycverbindungen bei Zusatz von 0,15% Gewichtsprozent der photochromen Verbindung Spiro (3-ethyl-1,3,5-trimethyl-indolin-2,2-(2H) (1,4) benzoxazin nur braun gefärbte Gläser ohne photochrome Reaktion ergeben.

Der dabei in 1,2 Gewichtsprozent eingesetzte Polymerisations-Initiator Diisopropylperoxidicarbonat zerstört nämlich auch hier wie bei CR 39 den photochromen Farbstoff.

Versuche mit den in der US 4.632.969 beschriebenen Mischung 1 und 7 aus monofunktionellen aromatischen Allylcarbonaten und Diallylphthalaten unter Zusatz von 0,3% Benzoylperoxid und den o.g. Farbstoff ergeben gelb bis ocker gefärbte Gläser mit nur noch schwach erkennbarem photochromen Effekt. Da die Vorfärbung und Schädigung von Polymerisationsablauf abhängt, dieser jedoch wieder in Zusammenhang mit der Glasstärke bzw. -wirkung steht, ergeben sich ungleichförmige und damit insbesondere für Wirkungsgläser unbrauchbare Färbungen.

Tauchfärbungen in Farbbädern, wie sie üblicherweise mit Gläsern aus Polydiethylenglykolbisallylcarbonat bei 90-95° C durchgeführt werden, sind mit Gläsern aus dem verwendeten hochbrechenden Kunststoffmaterial nicht möglich. Durch Quellung der Oberfläche werden auf dieser Strukturen erzeugt, die die Gläser für optische Zwecke unbrauchbar werden lassen.

Für die beispielhaften Gläser und die Vergleichsbeispiele wurden photochrome Verbindungen aus folgenden "Klassen" ausgewählt:
- Klasse I:: Spiro[indolino-2,2'- (2H) 1,4-oxazine] 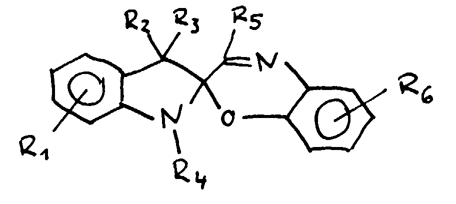
- Klasse II:: Spiro[adamantan-2,2'- (2H) pyrane] 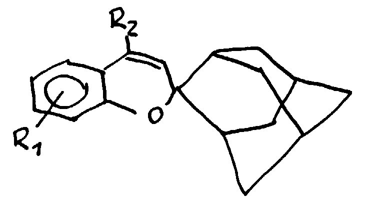
- Klasse III:: Spiro[fluroen-9,1'- (1,8 a) dihydroindolizine] 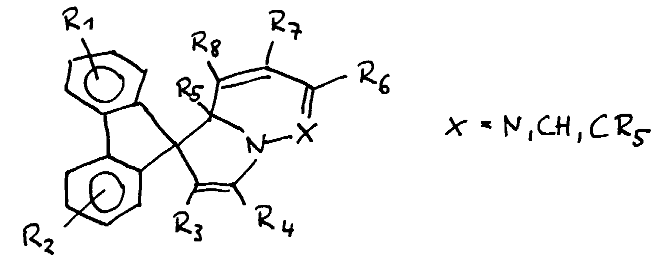
R₁ - R₉ stellen die in der jeweiligen Fach- und Patent literatur genannten Substituenten dar.

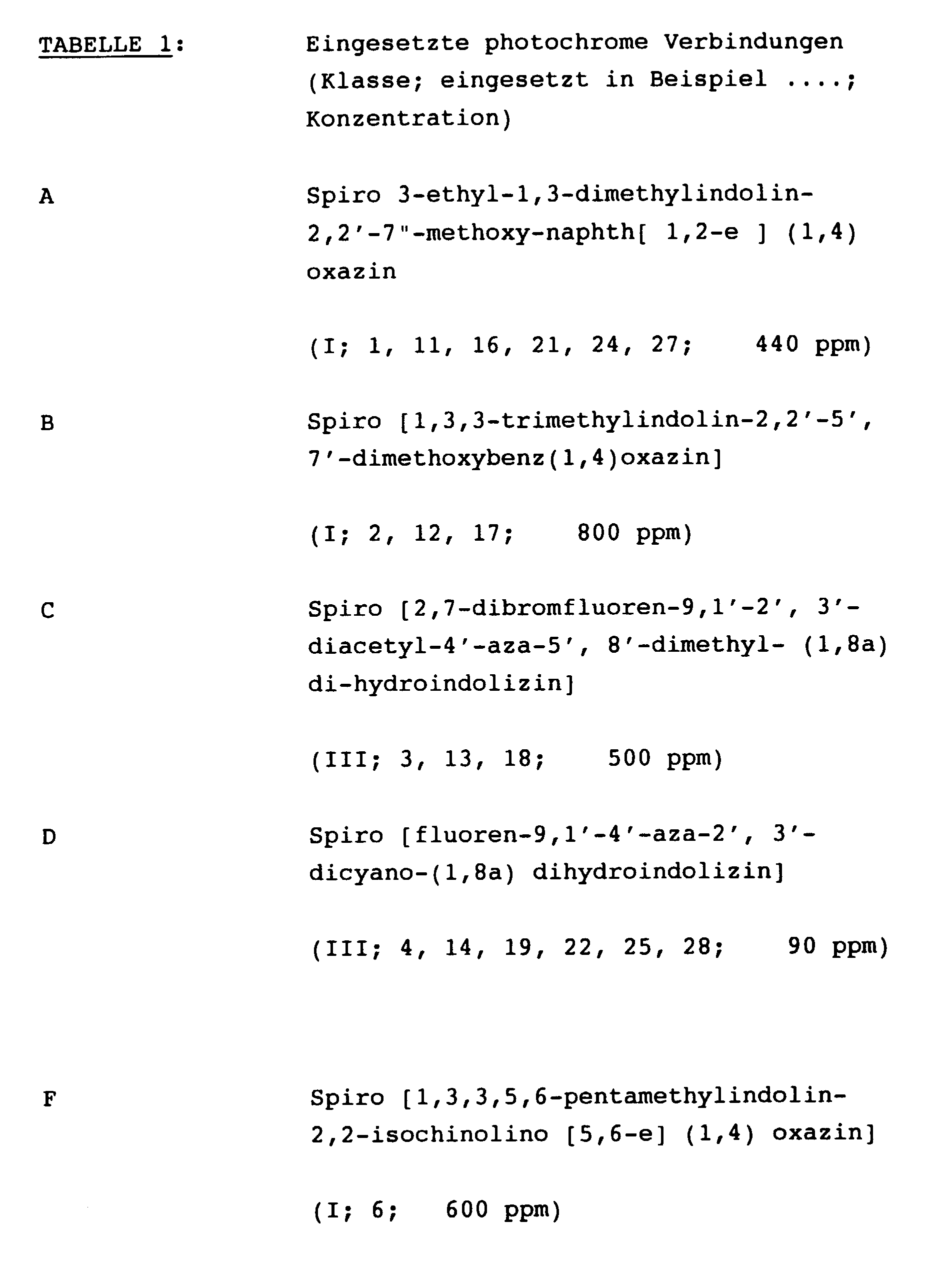

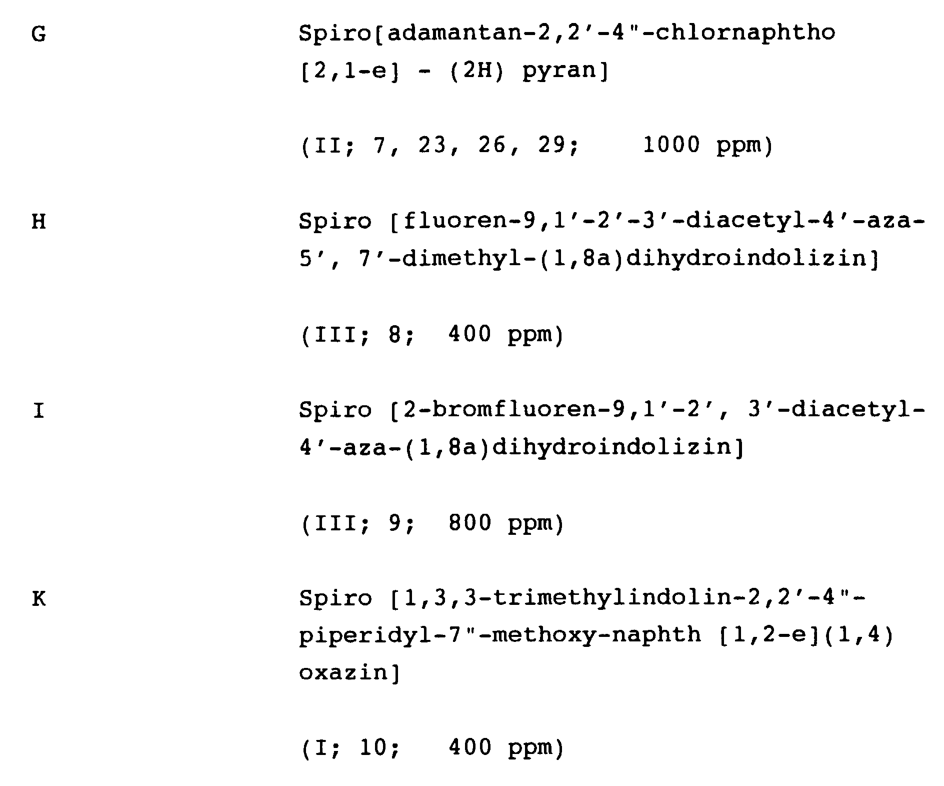

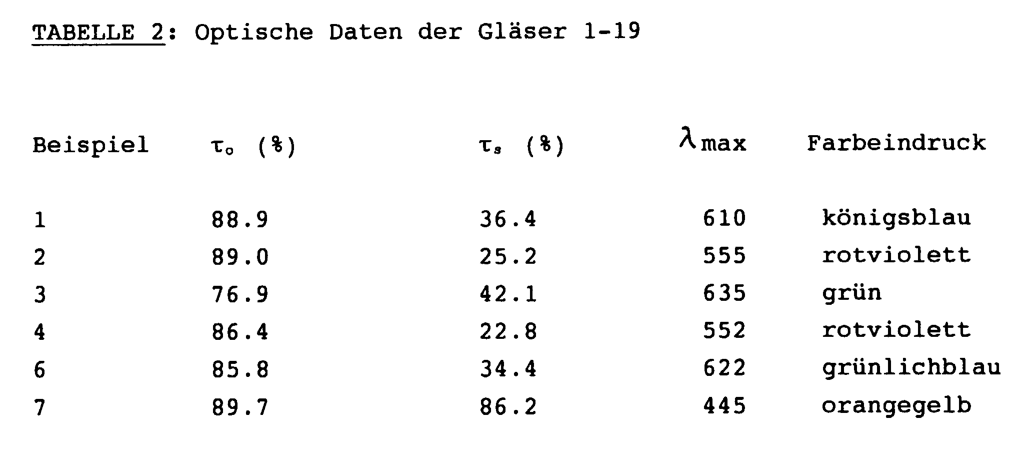

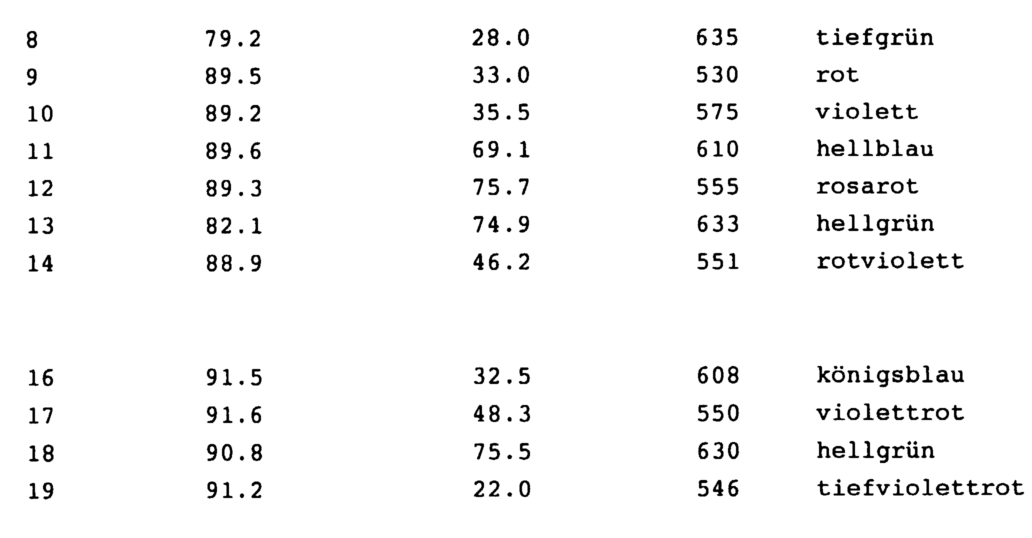

### Erklärung:

- τₒ :: Die Transmission eines unbelichteten Glases bei 23° C, bewertet nach der spektralen Empfindlichkeit des menschlichen Auges (V_{λ})
Der unbelichtete Zustand wird durch 30-minütiges Ausheizen des Glases bei 80° C im Dunkeln und nachfolgendes 30-minütiges Abkühlen im Dunkeln erreicht.
- τₛ :: Die Transmission des belichteten Glases nach V_{λ}
Der belichtete Zustand wird durch 15-minütige Bestrahlung mit einer Xenonhochdrucklampe bei 23° C in Anlehnung an DIN 58217 (60 KLUX) erreicht.
- λₘₐₓ :: langwelliges Absorptionsmaximum des belichteten Glases
- Farbeindruck:: des belichteten Glases nahe τₛ

### Anmerkung:

1. Der grüne Farbeindruck der mit den Verbindungen C und H gefärbten Gläser wird durch eine weitere Absorption um 440 nm hervorgerufen.
2. Die geringe spektrale Empfindlichkeit des menschlichen Auges um 445 nm läßt trotz intensiver Färbung keine Dunkelung eintreten (Beispiel 7). Die weitere Bewertung wurde daher nicht nach v_{λ}, sondern bei der Wellenlänge λ = 445 nm durchgeführt (τ (445 nm) = 40,3 %).

Die Farbtiefe (τₛ) der Gläser 1-10 ist über die Konzentration des photochromen Farbstoffs nahezu beliebig einstellbar, da die Löslichkeit der meisten untersuchten Verbindungen in der aromatischen Komponente der Gießharzmischung weit über 1500 ppm liegt.

Bei den Oberflächenfärbungen der Gläser 11-19 ist der Spielraum zu tieferen Färbungen nur mehr sehr gering, da die doppelte oder dreifache Konzentration an photochromem Farbstoff im Lack nur um wenige Prozente kleinere τₛ-Werte erbringt. Eine weitere Steigerung der Konzentration ist nicht möglich, da durch Kristallisation des Farbstoffs im Lack (übersättigte Lösung bei der Vortrocknung) ungleichmäßige, fleckige Färbung resultieren.

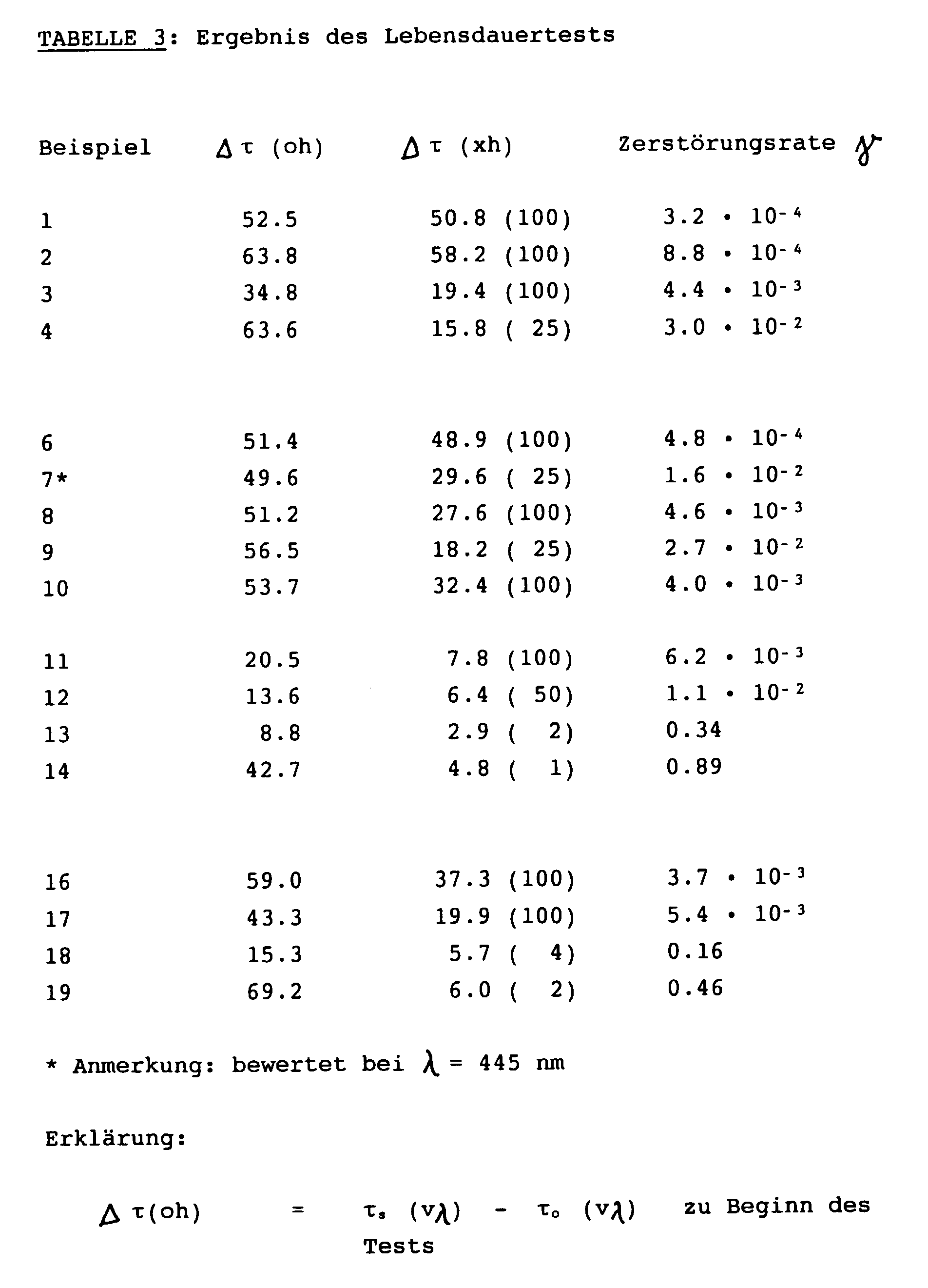

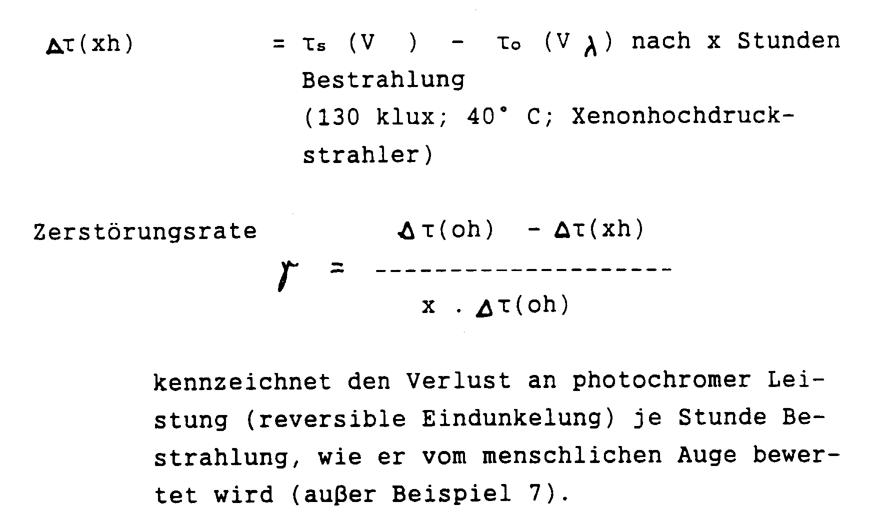

Durch die mathematisch ermittelte Kenngröße γ wird ein linearer - statt exponentieller - Verlauf der Zerstörung angenommen. Der Wert entspricht daher für x ≠ 1 dem gemittelten, nicht dem anfänglichen Verlust je Stunde Bestrahlungsdauer.

Gegenüber der Oberflächenfärbung des für Brillengläser am häufigsten verwendeten Kunststoffmaterials Diethylenglykolbisallylcarbonat beträgt die Zerstörungsrate bei dem erfindungsgemäßen Verfahren ja nach photochromer Verbindung 1/6 bis 1/40, gegenüber der Oberflächenfärbung des gleichen (hochbrechenden) Materials sogar nur etwa 1/15 bis 1/80.

Die Gebrauchslebensdauer eines photochromen Kunststoffglases wird damit gegenüber den bisher bekannten, z.T. auf dem Markt befindlichen, Produkten von z.B. 2 Monaten auf 1-7 Jahre erhöht. Bei einigen der untersuchten photochromen Verbindungsklassen sind für den praktischen Einsatz noch weitere Schutzmaßnahmen notwendig, z.B. der Zusatz von Antioxidanten (HALS) oder Singulett-Sauerstoff-Löschern (Ni-Komplexe) zur Gießmischung oder die nachträgliche Bedampfung mit vergleichsweise gasdichten anorganischen Schichten, wie Quarz, das Bestandteil nahezu aller Antireflexbeschichtungen auf Kunststoffgläsern darstellt.

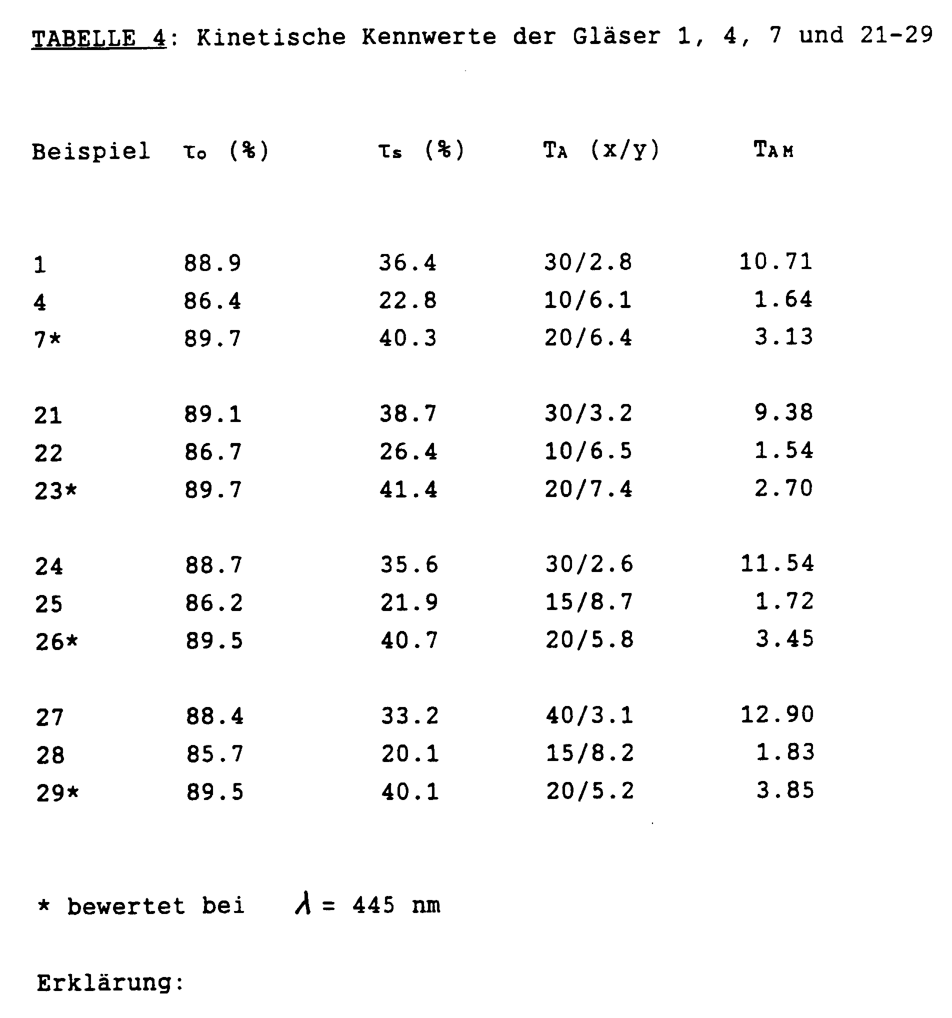

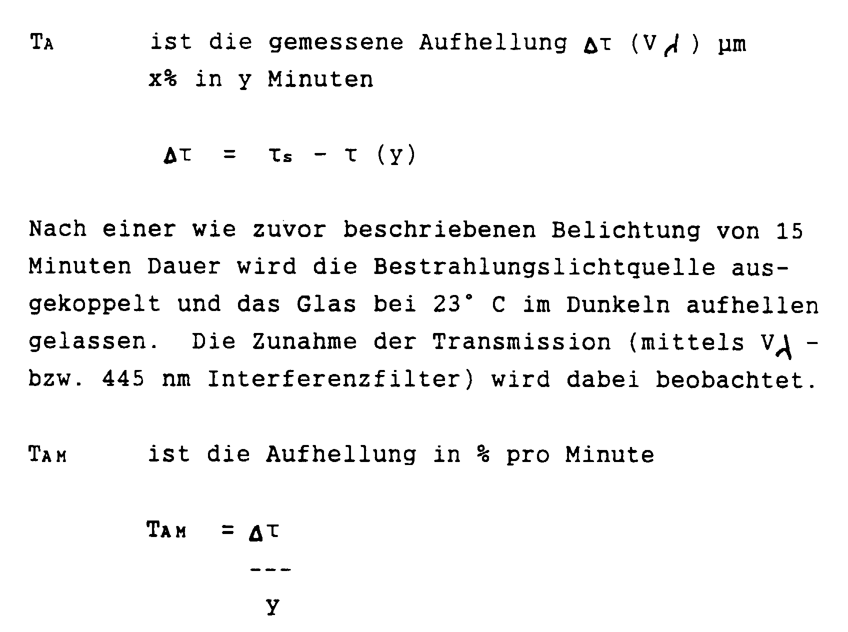

Die Änderungen in der Zusammensetzung der Gießmischung haben keinen meßbaren Einfluß auf die Polarität der ausgehärteten Kunststoffmatrix und die Farbe des photochromen Effekts.

Deutlich erkennbar ist jedoch der Einfluß auf das Aufhellverhalten der photochromen Verbindungen. Dieser ist auch in starkem Maße von der gewählten photochromen Verbindung abhängig. So beträgt der Unterschied in T_{AM} beim Übergang vom Standardmaterial (1, 4, 7) zum Material der Beispiele (27-29) bei Verbindung D nur knapp +12%, bei Verbindung G hingegen mehr als +23%.

Im folgenden wird die Erfindung anhand von Beispielen näher erläutert:

### Beispiel 1:

Bei Raumtemperatur und unter Feuchtigkeitsausschluß werden 1,84 Gewichtsteile Dibutylzinn-dilaurat, 0,2 Gewichtsteile der photochromen Verbindung A und 1000 Gewichtsteile m-Xylylen-diisocyanat vermischt, dann werden 2,3 Gewichtsteile eines Trennmittels auf Silikonbasis und 1300 Gewichtsteile Pentaerythrit-tetrakis-3-mercaptopriopionat zugegeben und zu einer homogenen Mischung verrührt. Die Mischung wird filtriert (1µ) und auf 285 K gekühlt. Die gekühlte Lösung wird durch mehrfaches Evakuieren und Belüften mit Argon von Sauerstoff befreit und in eine Form gefüllt. Diese besteht aus zwei Glasformen und einem Ring aus Polypropylen.

Nach einer Ruhezeit von 24 h bei Raumtemperatur erwärmt man auf 318 K. Nach 3 h Polymerisation bei dieser Temperatur erwärmt man auf 333 K, nach weiteren 2 h auf 353 K. Diese Temperatur wird nochmals 2 h beibehalten. Nach dem Abkühlen der Form auf ca. 340 K wird der Ring abgezogen und die fertige Linse entnommen.

### Beispiel 2-10:

Die Linsen wurden unter denselben Bedingungen mit den in Tabelle 1 angegebenen Konzentrationen an verschiedenen photochromen Verbindungen hergestellt.

### Vergleichsbeispiel 11-14:

Ohne Zusatz von photochromen Verbindungen wurden wie in Beispiel 1 farblose Linsen hergestellt. Diese wurden nach dem in der DE 3 516 568 als Ausführungsbeispiel beschriebenen Lack unter Zusatz von 1,5 Gew.-% der photochromen Verbindungen A-D bei 323 K während 30 Minuten oberflächengefärbt.

### Vergleichsbeispiel 16-19:

Im Handel erhältliche Plangläser (71 mm; MD 2 mm) aus Polydiethylenglykolbisallylcarbonat wurden nach dem selben Verfahren wie bei Vergleichsbeispiel 11-14 oberflächengefärbt.

Die optischen Daten dieser Linsen 1-19 sind in Tabelle 2 zusammengefaßt.

Die Gläser wurden einem Xenonlicht-Dauerbelastungstest Suntest der Fa. Original Hanau über 100 h unterzogen. Die Ergebnisse vor und nach der Belichtung sind in Tabelle 3 zusammengestellt.

Desweiteren wurde erfindungsgemäß gefunden, daß vergleichsweise geringfügige Modifikationen, die die mechanischen und optischen Daten praktisch nicht beeinflussen, große Einflüsse auf die Lebensdauer und insbesondere das Aufhellverhalten photochromer Farbstoffe besitzen.

### Beispiel 21-23:

Durch Ersatz von 207 Gewichtsteilen m-Xylylendiisocyanat durch 178 Gewichtsteile Mesitylentriisocyanat wurde in sonst gleicher Weise wie bei Beispiel 1, 4 und 7 photochrome Gläser hergestellt.

### Beispiel 24-26:

Durch Ersatz von 213 Gewichtsteilen des tetrafunktionellen Thiols in Beispiel 1 durch 229 Gewichtsteile des trifunktionellen Thiols Triethanolamin-tris-3-mercaptopropionat wurden in sonst gleicher Weise wie in Beispiel 1, 4 und 7 photochrome Gläser hergestellt.

### Beispiel 27-29:

Durch Ersatz von 141 Gewichtsteilen m-Xylylendiisocyanat durch 200 Gewichtsteile Tolyleniosocyanat und Ersatz von 192 Gewichtsteile Triethanolamintris (3-mercaptopropionat) wurden in sonst gleicher Weise wie in Beispiel 1, 4 und 7 photochromer Gläser hergestellt.

Ein Ersatz der tetrafunktionellen Thiole durch Diole und Triole ist möglich und beschleunigt ebenfalls die Aufhellung, allerdings wird dabei auch der Brechungsindex reduziert, sofern mehr als relativ 10% des Thiols ersetzt werden.

Die optischen und kinetischen Daten dieser Gläser im Vergleich zu Beispiel 1, 4 und 7 sind in Tabelle 4 zusammengefaßt.

## Patentansprüche

1. Optisch transparentes photochromes Kunststoffmaterial, das durch Einbringen photochromer Verbindungen in eine Mischung monomerer Bestandteile und nachfolgende Polymerisation erhalten wird, wobei die photochromen Verbindungen mindestens zwei über ein Spirokohlenstoffatom verknüpfte Ringsysteme aufweisen und ihre photochrome Einfärbung auf einem reversiblen Bindungsbruch zu dem Spiro-C-Atom beruht,
dadurch **gekennzeichnet**, daß die monomeren Bestandteile mindestens ein schwefelhaltiges Material aufweisen, und daß die photochromen Verbindungen in dem Kunststoffmaterial als feste Bestandteile enthalten sind.

2. Kunststoffmaterial nach Anspruch 1,
dadurch **gekennzeichnet**, daß das Kunststoffmaterial auf der Basis eines Polythiourethans beruht.

3. Kunststoffmaterial nach Anspruch 1 oder 2,
dadurch **gekennzeichnet**, daß die verwendeten Monomere Polyisocyanate sind.

4. Kunststoffmaterial nach einem der Ansprüche 1 bis 3, dadurch **gekennzeichnet**, daß die verwendeten Monomere Polythiole sind.

5. Verfahren zur Herstellung eines photochromen Kunststoffartikels aus einem Material nach einem der Ansprüche 1 bis 4,
mit folgenden Schritten:
(a) Beimengung der photochromen Verbindung zu, bei Raumtemperatur und unter Feuchtigkeitsausschluß befindlichem, Dibutylzinn-dilaurat und m-Xylylen-diisocyanat,
(b) Hinzugabe der zu unter (a) genannten Mischung von einem auf Silikonbasis beruhendem Trennmittel sowie von Pentaerythrit-tetrakis-3-mercaptopriopionat,
(c) Filtration der Mischung (b) und Abkühlung auf ca. 285 K,
(d) Entgasung der Lösung (c) durch Evakuierung und Belüftung mit einem inerten trockenem Gas, wie z.B. Argon,
(e) Abfüllung der Lösung in eine Form,
(f) Erwärmen der Form nach einer Ruhezeit von 24 h bei Raumtemperatur auf ca. 318 K,
(g) Nach 3 h Polymerisation bei Raumtemperatur weitere Erwärmung auf ca. 333 K,
(f) Nach weiteren 2 h Erhöhung der Temperatur auf ca. 353 K erhöht und Tempern bei dieser Temperatur für ca. 2 h,
(h) Entnahme des Artikels aus der Form nach Abkühlung auf ca. 340 K.

## Claims

1. Optically transparent photochromic plastics material, obtained by insertion of photochromic compounds into a mixture of monomeric ingredients and by subsequent polymerisation, the photochromic compounds having at least two ring systems linked by a spiro hydrocarbon atom, and their photochromic coloration being based on a reversible bond breakage to the spiro C atom,
characterised in that the monomeric components have at least one sulphur-containing material, and in that the photochromic compounds are contained in the plastics material as solid components.

2. Plastics material according to claim 1,
characterised in that the plastics material is on a base of a polyurethane.

3. Plastics material according to 1 or 2,
characterised in that the monomers used are polyisocyanates.

4. Plastics material according to one of claims 1 to 3, characterised in that the monomers used are polythiols.

5. Method of manufacturing a photochromic plastics article from a material according to one of claims 1 to 4,
with the following steps:
(a) Admixture of the photochromic compound to dibutyl tin dilaurate and m-xylylene diisocyanate at ambient temperature and with moisture excluded,
(b) addition to the mixture named under (a) of a separating agent on a silicone base, and of pentaerythrite-tetrakis-3-mercaptopropionate,
(c) filtration of the mixture (b), and cooling to approximately 285 K,
(d) Degasification of the solution (c) by evacuation and ventilation with an inert dry gas such for example as argon,
(e) Pouring the solution into a mould,
(f) Heating the mould to approximately 318 K after an inactive period of 24 h at ambient temperature,
(g) After 3 h of polymerisation at ambient temperature, further heating to approximately 333 K,
(f) After a further 2 hours, increase in temperature to approximately 353 K, and tempering at this temperature for approx 2 hours,
(h) Removal of the article from the mould after cooling to approximately 340 K.

## Revendications

1. Matière plastique photochrome optiquement transparente, que l'on obtient par introduction de composés photochromes dans un mélange de constituants monomères et par polymérisation subséquente, les composés photochromes présentant au moins deux systèmes cycliques reliés par l'intermédiaire d'un atome de carbone de type Spiro et leur effet de coloration photochrome reposant sur une rupture réversible de la liaison avec l'atome de carbone de type Spiro, matière caractérisée en ce que les constituants présentent au moins une matière contenant du soufre et en ce que les composés photochromes sont contenus sous forme de constituants solides dans la matière plastique.

2. Matière plastique selon la revendication 1, caractérisée en ce que la matière plastique est à base d'un polythiouréthane.

3. Matière plastique selon la revendication 1 ou 2, caractérisée en ce que les monomères utilisés sont des polyisocyanates.

4. Matière plastique selon l'une des revendications 1 à 3, caractérisée en ce que les monomères utilisés sont des polythiols.

5. Procédé de préparation d'un article en matière plastique photochrome, en une matière selon l'une des revendications 1 à 4, le procédé comportant les étapes suivantes:
(a) incorporation du composé photochrome à du dilaurate de dibutylétain et du m-diisocyanate de xylylène, à la température ambiante et à l'abri de l'humidité,
(b) incorporation, au mélange cité en (a), d'un agent de séparation à base de silicone ainsi que de tétrakis-3-mercaptopropionate de pentaérythritol,
(c) filtration du mélange (b) et refroidissement à environ 285 K,
(d) dégazage de la solution (c) par mise sous vide et passage à une atmosphère de gaz inerte sec, comme par exemple l'argon,
(e) versement de la solution dans un moule,
(f) après l'avoir laissé reposer durant 24 h à la température ambiante, chauffage du moule à environ 318 K,
(g) après 3 h de polymérisation à la température ambiante, réchauffage supplémentaire à environ 333 K,
(f) après 2 h supplémentaires, élévation de la température à environ 353 K et maintien à cette température durant environ 2 h,
(h) enlèvement de l'article du moule, après son refroidissement à environ 340 K.
